# EUROPEAN PATENT SPECIFICATION

(11) **EP 3 488 313 B1**
(45) Date of publication and mention of the grant of the patent: **30.08.2023**
(21) Application number: 17748684.2
(22) Date of filing: 20.07.2017
(51) Int. Cl.: G05D 23/19, F24D 10/00

(54) **REDUCTION OF THE RETURN TEMPERATURE IN DISTRICT HEATING AND INCREASING OF THE RETURN TEMPERATURE IN DISTRICT COOLING**
REDUKTION DER RÜCKLAUFTEMPERATUR IN HEIZUNGSANLAGE UND ERHÖHUNG DER RÜCKLAUFTEMPERATUR IN BEZIRKSKÜHLUNG
RÉDUCTION DE LA TEMPÉRATURE DE RETOUR DANS LE CHAUFFAGE URBAIN ET D'AUGMENTATION DE LA TEMPÉRATURE DE RETOUR DE REFROIDISSEMENT URBAIN

(30) Priority: 20.07.2016 EP 16180385
(43) Date of publication of application: 29.05.2019
(73) Proprietor: VITO NV, 2400 Mol (BE)
(72) Inventor: TOL, Hakan Ibrahim, 2400 Mol (BE); DESMEDT, Johan, 2400 Mol (BE); SALENBIEN, Robbe, 2400 Mol (BE)
(74) Representative: IPLodge bv
(86) International application number: PCT/EP2017/068406
(87) International publication number: WO 2018/015508

(56) References cited:
- WO-A1-2010/087759
- KR-B1- 101 181 490
- Maroufpiroutia ET AL: "Optimisation of supply temperature and mass flow rate for a district heating network", , 4 December 2014 (2014-12-04), XP055333736, Retrieved from the Internet: URL:https://www.researchgate.net/profile/A udrius_Bagdanavicius/publication/268202032 _Optimisation_of_supply_temperature_and_ma ss_flow_rate_for_a_district_heating_networ k/links/548040500cf250f1edbfe05e.pdf [retrieved on 2017-01-10]
- JONAS GUSTAFSSON ET AL: "Experimental evaluation of radiator control based on primary supply temperature for district heating substations", APPLIED ENERGY, ELSEVIER SCIENCE PUBLISHERS, GB, vol. 88, no. 12, 23 June 2011 (2011-06-23) , pages 4945-4951, XP028278864, ISSN: 0306-2619, DOI: 10.1016/J.APENERGY.2011.06.050 [retrieved on 2011-07-12]
- Linn Saarinen: "UPTEC ES08 007 Modelling and control of a district heating system", , 31 March 2008 (2008-03-31), XP055670856, Retrieved from the Internet: URL:http://www.diva-portal.org/smash/get/d iva2:461661/FULLTEXT01.pdf [retrieved on 2020-02-21]

## Description

The present invention relates to a heating or cooling district network, and/or to a method of operation of a heating or cooling district network in accordance with the performance of local units such as in-house units to achieve a low-supply/high-supply temperature at a DH/DC network respectively, as well as software which when executed on a processing engine, implements a method of operation.

### Background

A district heating or cooling system is preferred with a high temperature difference ΔT between the temperature of supply and return flows and a low flow rate to reduce high pressure operation. In such heat distribution systems, constant flow systems and variable flow systems and mixes of the two are known. The advantage of a constant flow system is being able to set flows to achieve hydraulic balance. The disadvantages are potentially a high return temperature, high heat losses in the network and high pumping costs. The advantages of a variable flow system are potentially the low return temperature and the low heat losses in the network. The disadvantage is the risk of insufficient hydraulic balance. Typical application types in central heating with variable flow can be with and without mixing loops. Pressure and flow controllers can be used to maintain a hydraulic balance, e.g. : flow controller, differential pressure controller, differential pressure controller with flow limitation, differential pressure controller with flow control, combined temperature controller and differential pressure controller.

Resetting i.e. reduction for a district heating (DH) and increasing for a district cooling (DC) network, of the supply temperature is a common control method to operate heating or cooling district networks. Most often, the resetting is carried out according to a rule-of-thumb based on a measured outdoor temperature; i.e. the district network operator increases/decreases the supply temperature according to the outdoor temperature when it decreases/increases at the DH/DC network, respectively.

Also, most of the in-house heating/cooling units are equipped with thermostatic control valves for which there are reference levels each of which refer to the heating/cooling rate, respectively. These valves can result in over-heating/-cooling (or under-heating/-cooling) especially when the supply temperature is increased/decreased by the network operator and/or flow fluctuations due to pressure condition changes (both static pressure and differential pressure). In such a case a thermostatically controlled valve may reach the end of its control range after which no further control is carried out so that a room in a building may be overheated or over-cooled.

A conventional outside temperature control of a central heating device typically makes use of weather compensation heating curves to control supply temperature of rooms or a DH system based on a measured outside temperature. The selection of the relevant heat curve is often done by hand without making any measurements and the results are often poor such that the heating curve has to be overridden manually quite often. Also, because the outside temperature sensor is often placed on an outer wall of the building close to the central heating device, the temperature measured there is not representative of the actual momentary heating requirement of the house.

To try and overcome these disadvantages it is known to use an outer closed control loop, in which a local inner circuit of the flow temperature control is embedded. The feedback loop can operate with a conventional, weather corrected, outside temperature control on a reference input of the inner loop of the flow temperature.

WO 2010/087759 describes a DH network with an indirect substation configuration, i.e. the temperature of the heating fluid is adjusted in the substation with the purpose of building a relationship between the primary (DH network) and the secondary (in-house or in-building circuit) supply temperatures by means of adjusting the flow at the secondary side to set the secondary supply temperature. This is done in a control unit for heat exchanger operation, e.g. in the substation. The set value of the secondary supply temperature (e.g. inlet to the in-house radiator unit) is defined according to the primary supply temperature by adjusting the primary side control valve and the flow. It makes use of demand based control of the secondary temperature (at the heating source) according to the heat demand from the consumers and the performance of their in-house heating units to achieve the lowest return temperature, i.e. the increment of supply temperature is applied when the return temperature and/or flow rate increases (which means of decrement of ΔT).

A district heating system has been disclosed by L. Saarinen in "UPTEC ES08 007 Modelling and control of a district heating system", 2008. In this document, a model is presented to predict a heat load wherein the outdoor temperature is used as an input for the model. A supply temperature is adjusted as function of the heat load predicted. A disadavantage of such a system is that it is relying on a theoretical model and relying on outdoor temperature measurements, which results in an overall more complex control system.

### Summary of the Invention

An aim of the present invention is to reduce the return temperature for DH systems and increase the return temperature for DC systems, both having the purpose to avoid the low ΔT syndrome. Preferablythe supply temperature of the DH system is kept at the most energetic for normal use or reduced to the lowest possible considering especially the long-lasting off peak heating periods. It is preferred if a direct substation for which the primary supply temperature circulating in the DH/DC networks is directly canalized to the secondary (house) circuit. The secondary side supply temperature is not (i.e. does not need to be) adjusted at the substation level by means of a substation control unit as disclosed in WO 2010/087759 .

An advantage of embodiments of the present invention is reducing or preventing the occurrence of an over-heating/-cooling above/below the comfort indoor temperature in the heated/cooled local units low, and/or reducing or preventing the occurrence of a ΔT syndrome related to high/low return temperature of DH/DC networks, respectively. Embodiments of the present invention perform monitoring by a central monitor at district level and and preferably use direct substation configurations although altering the substations to indirect operation can be added as an addition or alterative. Embodiments of the present invention use adjustment of the primary supply temperature at the heat source in accordance with the performance of the consumers' in-house heating units. This is done by performance measurement selected from flow rate, return temperature, pressure drop at the consumer level etc. Although a main purpose is to lower the return temperature, embodiments of the present invention also can have an aim of lowering the supply temperature. The control logic of embodiments of the present invention require simultaneous adjustment of the primary supply temperature (from the heat source) together with the adjustment of the flow rate at the secondary side (at the substation or in building heating radiators or cooling heat exchangers. This is done while passing the supply fluid from the source through the substation(s) without change of temperature, i.e. without building a relationship between the primary (DH network) and the secondary (in-house or in-building circuit) supply temperatures by means of adjusting the flow at the secondary side to set the secondary supply temperature. This could be offere a an addition or alternative. Embodiments of the present invention make use of demand based control of the primary supply temperature (at the heating source) according to the heat demand from the consumers and the performance of their in-house heating units to achieve the lowest return temperature, i.e. the increment of supply temperature is applied when the return temperature and/or flow rate increases (which means of decrement of ΔT).

An aspect of the present invention is provision of a Demand-Based Operation of DH/DC network and/or method of operation of the same which involves resetting a supply temperature at a heat/cold source according to the performance of heating/cooling systems, respectively of local units such as houses, buildings or industrial premises. There is preferably no adjustment of fluid temperature at a substation but rather that the unadulterated supply fluid from the source is passed to the heating/cooling systems, respectively of local units such as houses, buildings or industrial premises. It is preferred to replace thermostatically controlled valve at heating/cooling systems, respectively of local units such as houses, buildings or industrial premises rather than alter the supply temperature at substations. Such a system or method of operation can be applied to existing DH/DC networks with existing heating/cooling systems for local units but such a system or method of operation is also valid for newly designed networks. An aspect of the present invention is a demand-based operation with adjustment of a supply temperature at a source according to a local flow rate, a local return temperature, or other criteria such as a pressure drop below a design level, a valve operating at or close to its maximum or minimum range. In this demand-based operation of the network, a supply temperature is kept low or as low as possible at the source according to the flow limits of the heating/cooling devices of local units, with the purpose of keeping the return temperature (from the local units) as low as possible to avoid a low ΔT syndrome.

The system is preferably a variable flow network only at the local units in the district network and the operation is preferably a variable flow control at the local units in the district network according to the performance of the local units in the district network,e.g. by thermostatically controlled vaves, while using direct substations.

Accordingly, a flow rate or a return temperature at a local unit (e.g. house) is measured to determine if the flow rate or return temperature reaches to or is close to an upper or a lower limit. When the flow rate or return temperature at a local unit reaches to an upper limit (or reaches another limit before this upper limit, which is an indicating point that the heating demand or cooling power demand is increasing), a signal is sent to the heating or cooling source or a device that controls these, e.g. to a monitoring unit with a controller. This signal is used to increase or decrease the supply temperature at the heating source, e.g. by a device under the control of the district network operator. Vice versa applies for district cooling. The upper and lower limits used for this control do not need to be absolute upper and lower limits, but maybe be set at lower or higher intermediate values, respectively whereby, for example, reaching these intermediate values is indicative that the full range will be reached if nothing is done. After a change is made to a supply temperature the flow rates or return temperature of the local units is/are checked again and any further change in the supply temperature is carried out as necessary in open loop control. This procedure is continued in an iterative manner until the flow or the return temperature in the local units lies within the upper and lower limits.

Hence, a heating or cooling source is adjusted in accordance with the flow or return temperature at the district network local unit heating or cooling devices. The supply temperature from the source has an influence on the controllers of the valves in the local units, e.g. increasing of the supply temperature when the heat demand (of the local unit) remains the same results in a reduction of the return temperature from the local unit heating system and of the flow rate due to the thermal behavior of the local thermostatic valves.

Optionally in addition, a deviation of the obtained value from the expected or calculated value for a return temperature and/or flow rate can be used in a closed loop control sub-system if there is a fault in the local unit thermal system.

An aspect of the present invention is equipping the local units such as house or building, industrial premises with self-driven thermostatically controlled valves on all heaters or coolers. These thermostatically controlled valves can use an indoor temperature as a set point and the set point should be specified which relates to the desired indoor temperature (i.e. not the setting of reference levels, each of which refers to a different heating/cooling rate). Existing thermostatically controlled valves are often self-driven (indoor temperature based) thermostatically control valves which adjust the flow rate in the heat supplying heat exchangers (i.e. radiator in local house or building in case of a heating unit and air handling unit in case of cooling rather than (i.e. excluding) a change in secondary supply from a heat exchanger at a substation) in the local units automatically in order to achieve a set-point temperature that is defined by the consumer. The thermostatically controlled valves are preferably active thermostatically controlled valves. If they have no a sufficient control they should be replaced.

The actual flow rate of the local units, which has been defined automatically by the thermostatically controlled valves, is monitored by the district network operator. If the flow rates of the local in-house units reach to an undesirable levels, the operator increases/decreases the supply temperature for the DH/DC networks, respectively. An undesirable level can be a high or an elevated return temperature (for heating or for cooling) or a reduced or low return temperature, or increased flow (both for cooling and/or for heating) or a pressure drop below a design level, or a valve operating at or close to its maximum or minimum range (for both heating and/or cooling). An undesirable level can be a high or an elevated flow (for heating or for cooling) or a reduced or low flow (for cooling or for heating).This action by the operator i.e. an increment/reduction of the supply temperature (e.g. to a discrete higher or lower degree) results in a decreased/increased return temperature from the local unit while, when the return temperature is too low/high, reducing/increasing the supply temperature is another action carried out by the operator (with the purpose to lower the energy loss from the DH/DC piping network and other system equipments) in the DH/DC, respectively. The aim is to keep the supply temperature at its possible lowest/highest value in the DH/DC network, respectively.

Embodiments of the present application use a feature of determining the network operation according to the performance of the cooling or heating devices of local units. This avoids any inefficiency that is possible with the rule-of-thumb method.

The present disclosure also includes software which when executed on a processing engine executes any of the methods of the present invention. The software can be stored on anon-transitory signal storage medium.

Advantages of embodiments of the present invention are one, some or all of the following ;
(i) low-temperature (as low as 55°C)/high-temperature (as high as 10°C) operation in long-lasting off-design periods,
(ii) Systems and methods according to embodiments of the present invention are able to avoid a ΔT syndrome by reduced/increased return temperature (avoiding low ΔT syndrome) through the whole period of heating and cooling season,
(iii) avoiding of over-heating/-cooling or under-heating/-cooling, the last three bullets in order respectively for DH networks and for DC networks, and
(iv) low rate of flow pumped by the main pump station of the network (both in DH networks and DC networks).

### Brief Description of the drawings

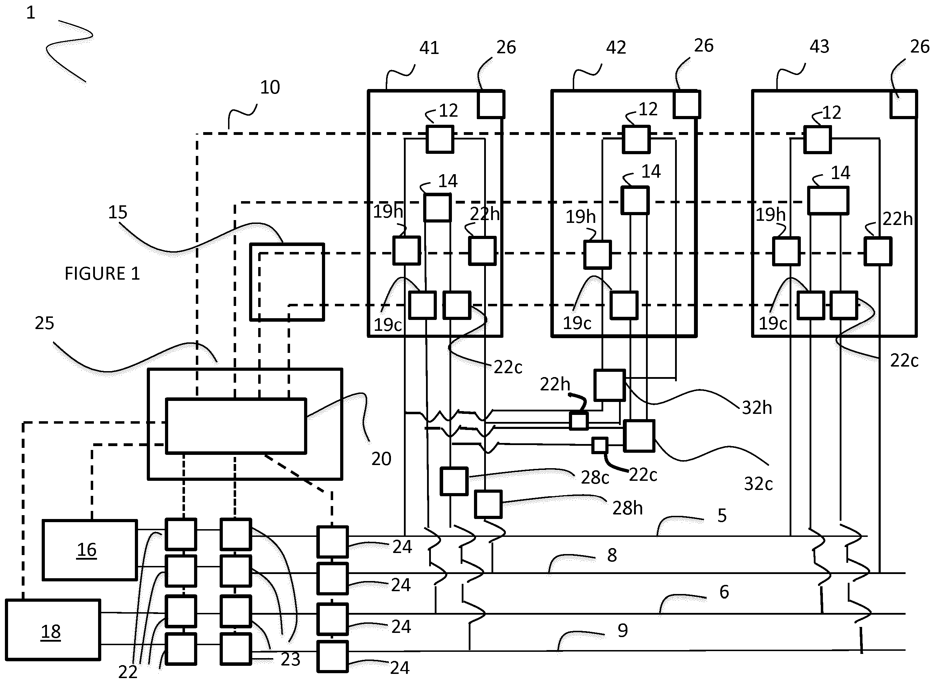

Figure 1 shows a network in accordance with an embodiment of the present invention.

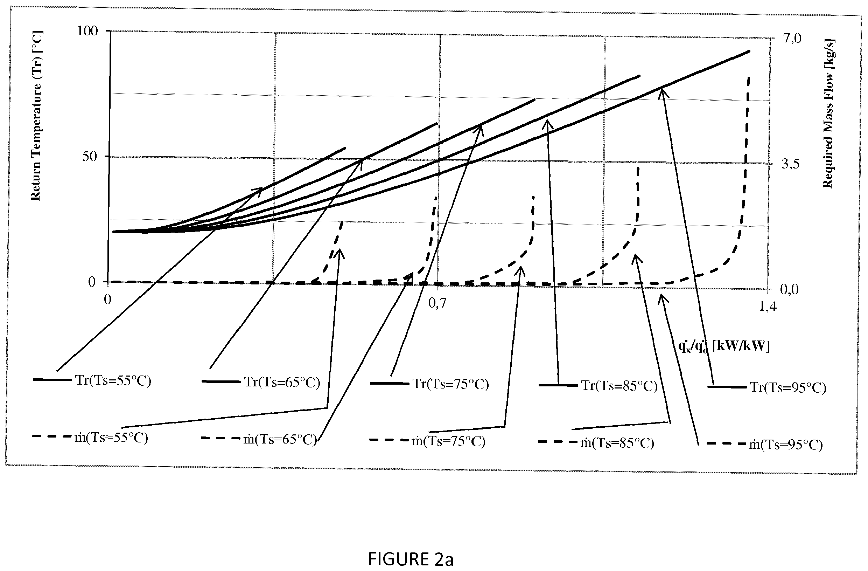

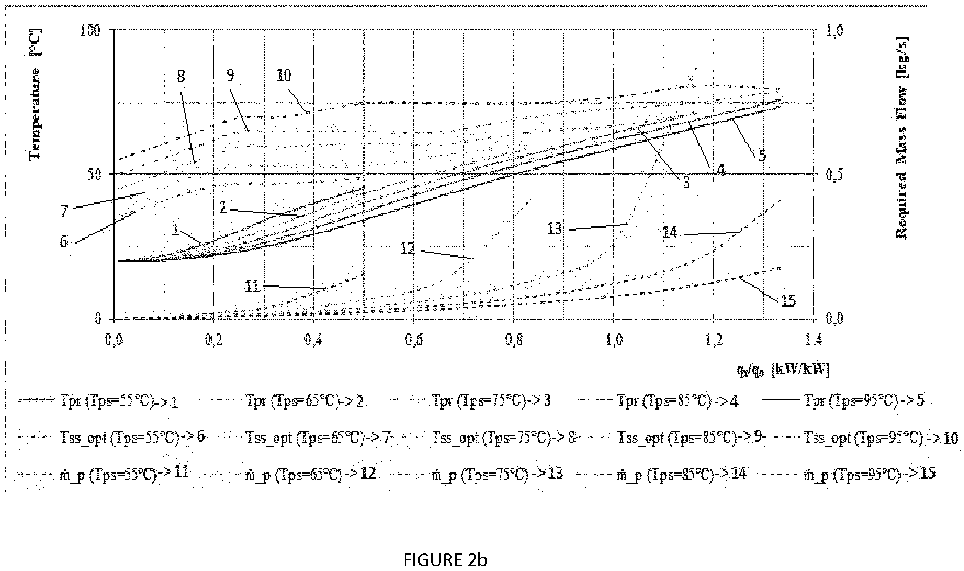

Figure 2 shows performance values of two networks Figure 2a shows a network with a direct substation configuration in accordance with embodiments of the present invention. and Figure 2b shows a network with an indirect substation configuration which is generally only to be considered and addition or option. The network of Figure 2a comprises an in-house heating unit (such as a radiator in a building), whereby especially the change of the return temperature and the required mass flow rate according to differing degrees of source supply temperature at various rates of heat demand as can be used in embodiments of the present invention. The original heat output of the radiator was q̇ₒ=9 kW and its design parameters being 90°C as the supply temperature, 70°C as the return temperature, 20°C as the indoor temperature. Figure 2b shows a nested embodiment of the present invention including a space heating heat exchanger in the substation and an in-house heating (a radiator) or cooling unit. A substation control unit can be controlled according to logic disclosed in WO2010/087759 (A1), which controls the supply temperature to the housing pipe loop (after the heat exchanger - Tss) to achieve the minimum return temperature to the DH network (before the heat exchanger - Tpr). The purpose of nested embodiment of the present invention is to provide a mutual performance of the indirect substation configuration (space heating heat exchanger and radiator together) and to define the effect of the DH supply temperature (Tps) on the DH return temperature (Tpr). Considering the primary side of both substation configurations, a same performance behaviour type can be obtained with the network of Figure 2b as in the network of Figure 2a. Conduits indicated by `dot dash' lines in Figure 2b respresent the provision of a good or optimal supply temperature (Tss_opt) to the in-house heating conduit according to each actual heat demand rate (q̇ₓ) and each DH supply temperature (Tps).

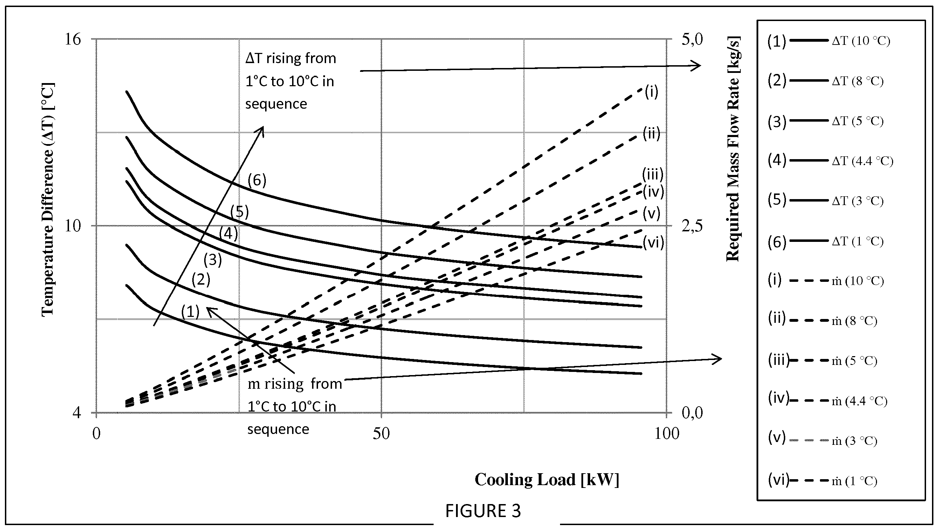

Figure 3 shows a performance of an in-house cooling unit, especially the change of the return temperature and the required mass flow rate according to differing degrees of supply temperature at various rates of cooling demand whereby the(design parameters are defined with the supply temperature being 4.4°C and the return being 13°C while the air inlet temperature is 41°C and the outlet being 26°C, at a total cooling load of 44.34kW.

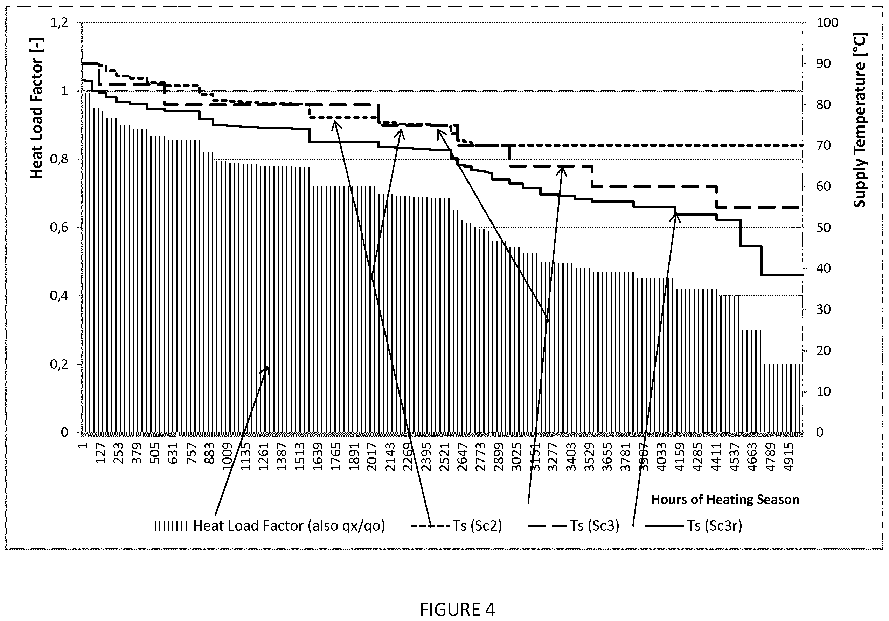

Figure 4 shows supply temperature for conventional scheme Sc2 as rule-of-thumb, an embodiment of the present invention Sc3 as performance based supply and a further embodiment of the present invention Sc3r as further reducing of Sc3 with excessive mass flow rates according to the heat load duration in a year period.

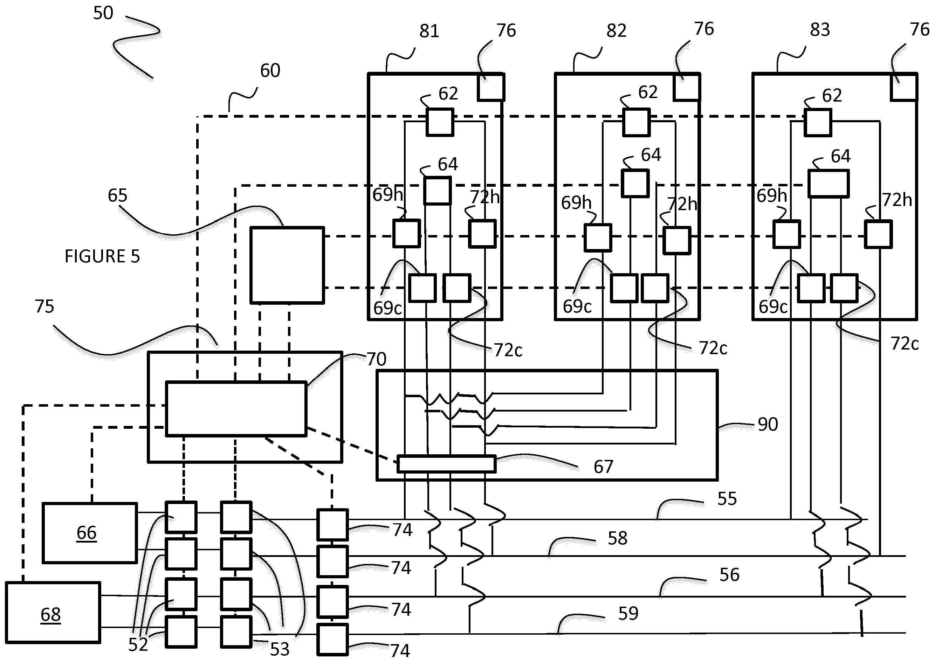

Figure 5 shows a network in accordance with another embodiment of the present invention.

### Definitions

The term "central" as used in "central monitor" means that the monitor is able to collect the control data from any part of the DH/DC network. The monitor is configured to be able to receive control data optionally from anywhere in the the network, to receive local temperatures, valve positions, local flow rates, local cooling and/or heating medium pressures in the local heating and/or cooling systems. The monitor can have hierarchical or distributed structure. As shown schematically in Figures 1 and 5, central monitor 25, 75 is coupled for transfer of control data to the sources 16, 18, 66, 68, houses, buildings and industrial premises 41, 42, 43, 81, 82, 83 controllable pumps 2, controllable valves 3, sensors 24, 74, substation 90, manifold 67 comprising valves and bypass conduits.

The term "Source"refers to the entity which provides heating or cooling fluid to the netwoks and which there is no higher level source. In accordance with embodiments cooling and/or heating fluid is not cooling or heating fluid at the outmet side of a substation. Preferred embodiments of present invention transfer fluid at source temperature to premises directly without controlling a relationship between a primary and a second flow e.g. at substations.

A "direct substation" transfers heating or cooling fluid at source temperature to premises which can be hhigher of lower than the source temperatue, e.g. by controlling a relationship between the temperatute of a primary and a second flow at such a substation.

### Detailed description of the embodiments

The present invention relates to the operation of a district network in accordance with the performance of local units such as in-house heating and cooling units to achieve a low-supply/high-supply temperature for a DH/DC network respectively.

Embodiments of the present invention relate to a thermal energy distribution system, e.g. for district heating and/or district cooling in which thermal energy transported by a heat carrier is for heating and/or cooling of local units such as houses, buildings, or industrial premises. The heating and/or cooling of local units is obtained by circulating a heat carrier from centrally controlled heat sources (heating or cooling sources) through a conduit or conduits to heat/cool devices of the local units. Hence, heating or cooling energy is arranged to be distributed to heating or cooling devices by means of a supply conduit or conduits and the spent heat carrier is returned in a return conduit.

Embodiments of the present invention relate to district heating or cooling schemes comprising local units such as houses, buildings and industrial premises, a network of conduits and heating or cooling energy sources typically generated in large, centralised heating or cooling plants.

Although less preferred the heated or cooled heat carrier from the central heating or cooling plants, can be mixed with returned heat carrier from local units of a district heating or cooling system. Preferably this is not done but coul be offered as an assition or optional alternative.

A local unit such as a house, a building or industrial premises receives heating and/or cooling power in a heat carrier via a network of conduits. The heat carrier can be water. Hot water can be obtained as a by-product of electricity generation or from geothermal plants. Water can be cooled by refrigeration plants. Cold or hot water is pumped by pumps through the network of conduits to supply a local unit. The hot water can be used to heat radiators. The hot water returns, now cooled, to the centralised heat source. The cold water can be used to cool ventilation air of air conditioning units. The cold water returns, now heated, to the centralised cooling plant. For local units connected to the network, heating and cooling power can be needed simultaneously. The district systems of the present invention have supply and return conduits for heating and for cooling, i.e. four conduits.

The network may also include thermal accumulators, e.g. heat storage and cooling tanks, e.g. to deal with peak loads.

Modifications that may need to be carried out with existing networks include equipping heat exchangers with thermostatic control valves such heat exchangers being, for example radiators, air handling units for heating, or cooling, respectively in buildings preferably not including heat exchanger(s) in the substationand also pressure limit measures, e.g. imbalance of pressure can also cause over- or under-flows at the local units (including substations). The thermostatically controlled valves are preferably active thermostatically controlled valves. Pressure considerations through the network can result in a further reduction/increase of the supply temperature together with a reduction of the return temperature for heating and cooling systems respectively.

Figure 1 shows a network 1 for distributing heating and/or cooling power. The network 1 can be meshed or not. Conduit 5 supplies a heat carrier used for heating local units 4, such as 41, 42, 43 such as houses, buildings and industrial premises with heat exchangers such as radiators. Conduit 6 supplies cooling water for cooling the local units 41, 42, 43 with heat exchangers such as air conditioning units. Conduits 8 and 9 are return conduits for conduits 5 and 6, respectively. The local units 41, 42, 43 have cooling devices 14 and/or heating devices 12. Heated water is supplied to heating devices 12 and cooling water is supplied to cooling devices 14. The heated water now cooled is returned via the return conduit 8, and the cooling water now heated by return conduit 9. Some consumers may be supplied from a substation (not shown in Figure 1, nor in substation 90 of Figure 5) with indirect configuration having a heat exchanger 32h and 32c shown in Figure 1 schematically) between the district distribution network (the conduits 5 and 8 for DH or conduits 6 and 9 for DC, respectively) and the local house, building and industrial premies energy distribution circuits at DH and DC, respectively. Heat exchangers 32h and 32c can also be included in substation 90 shown in Figure 5 to create an indirect substation. The network 1 can be only for heating or only for cooling or can be for both.

In the local units 41, 42, 43 the heating devices 12 and/or the cooling devices 14 are connected hydraulically in parallel. Each of the heating devices 12 and/or the cooling devices 14 are connected to conduits 5 and 6, respectively and conduits 8 and 9, respectively through bypass conduits. Flow of heat carrier to the heating devices 12 and/or the cooling devices 14 is controlled by thermostatically controlled valves 19, e.g. 19h for the heating circuit and 19c for the cooling circuit. The thermostatically controlled valves are preferably active thermostatically controlled valves.

The network 1 can include one or more controllable pumps 2, one or more controllable valves 3 and one or more heat energy sources 16 and/or one or more cold energy sources 18. The heat energy source 16 and/or the cold energy source 18 can be controlled by a controller 20. The network 1 may also include thermal accumulators (not shown), e.g. heat storage and cooling tanks, e.g. to deal with peak loads and these can also be controlled by controller 20.

Embodiments of the present invention relate to a controller 20 for temperature of a heat carrier from a heating or cooling source based on a distributed control using thermostatically controlled valves 19h, 19c in local units 4, e.g. 41, 42, 43 such as house, buildings, industrial premises. The flow can be measured and, according to such measurement, supply temperature is raised or lowered (adjusted/set/reset) according to the measured flow. This makes controlling flow unnecessary but some flow control can be provided as an option or alternative.

The thermostatically controlled valves are preferably active thermostatically controlled valves. These thermostatically controlled valves 19h and 19c set the local flows based on a set point which can be set locally by users according to the desired room or building temperature. Control data, e.g. any, some or all of temperatures, flow rates, pressures, valve operations from the local units 41, 42, 43 such as houses, buildings or industrial premises can be measured by sensors 22, e.g. 22h for the heating circuit and 22c for the cooling circuit. These sensors 22h and 22c are shown in the return bypasses from devices 12 and 14 respectively to measure return temperatures or fluid temperatures in the return bypasses from heat exchanger device 32c, 32h shown in Figure 1, e.g. for an indirect substation configuration (not shown in Figure 1 or 5 but can be included in a substation in Figure 1 or in substation 90 of Figure 5 for example). In addition valves 19h and 19c can be adapted to report their state to controller 20 but may also be associated with a temperature sensor for reporting input temperatures to the controller 20. In addition sensors 22h and 22c and valves 19h and 19c can be adapted to measure flow rates and to report these flow rates to controller 20. Control data such as any, or some or all of temperatures, flow rates, pressures, valve operations from the network 1 can be measured by an array of sensors 24. These control data are brought to a central monitoring unit 25 which includes controller 20. By this arrangement local unit and network flows and pressures and temperatures can be monitored and transmitted to the central monitoring unit 25 and to the controller 20 which is adapted to identify when the distributed control system is not working well.

Thermostatic control valves 19h and 19c are installed to control all heat exchangers in the local units used for heating or cooling, such as radiators andair conditioning equipment . These thermostatically controlled valves 19h and 19c control based on an indoor temperature meaning that control valves 19h and 19c are preferably self-driven to adjust the flow rate in the local units 41, 42, 43 automatically in order to achieve a set-point temperature that is defined by the consumer for each thermostatically controlled valve 19h or 19c. The indoor temperature is measured by a sensor 26. The thermostatically controlled valves are preferably active thermostatically controlled valves.

The data collection and transmission circuits may have a different topology from the conduits for supplying a heating carrier. For example the control data network 10 can include a node 15 which can be adapted to collect and transmit control data to the controller 20. Node 15 can be adapted to aggregate control data. Also the circuits and networks controlled by a local organisation providing heating and cooling to end users may be different from the circuits and networks controlled by a network operator, the operator being a provider to the local organisations.

For example, the return flow rate and temperature defined automatically as a consequence of the operation of the thermostatically controlled valves 19h and 19c can be monitored by monitoring devices 28 of a district network operator. Values of flow rates are communicated to a central monitoring unit 25 and the controller 20. If the flow rates of the local units 4 reach to an undesirable levels, i.e.valves 19h or 19c are operating at an end of their control range, e.g. around shut-off or fully open this can be detected by the flow rates sensors 22h or 22C or 28h or 28c. If the heat carrier has reached a high or elevated return temperature above a certain value or a depressed or low return temperature below a certain value, the central controller 20 of the network operator can increase/decrease the supply temperature of the sources 16 or 18, respectively. This is preferably done in a step-wise manner, i.e. in an open loop control manner. This action by the controller 20 of the operator results in decreased/increased return temperature from the local units 41, 42, 43. The operation to control the source temperature can be automatic. It is preferred if the source temperature is controlled directly, e.g. by altering fuel consumption where that is appropriate. For example, a high temperature of the source results in a higher temperature difference at the consumer heating unit. A less preferred method of control of source temperature can be through mixing hot and cold carrier, e.g. hot and cold water at the sources but mixing lowers supply energy. Supplying cooling fluid at the unadulterated source temperature through direct substations to local units in housing and industry premise results in higher temperature difference at the consumer heating or cooling unit(s) this resulting in no decay of the high supply energy from the source. Preferred temperature adjustment at the heating or cooling source can be by control of fuel intake to a boiler or by similar methods appropriate to the heating or cooling source e.g. low supply temperature with reduced fuel intake or reduced steam extraction from the CUP cycle which results in higher electricity production. Hence mixing in any of the parts of the DH/DC network is less preferred. However it is not excluded that embodiments of the present invention can use mixing as an optional assition or alternative if any advantages outweigh the disadvantages.

A particular control problem based on the performance of the local unit occurs when one heating thermostatic valve 19h in one building reaches its upper flow limit and cannot open any further or when this thermostatic valve 19h reaches a value approaching such an upper limit. A similar problem occurs when one cooling thermostatic valve 19c in one building reaches its upper flow limit but cannot open any further or when this thermostatic valve 19c reaches a value approaching such an upper limit. It is preferred if such thermostatic valve are exchanged for ones with a bigger control range. Valve status reported back to controller 20 also allows controller 20 to make step-wise changes in source temperatures to address these problems. The thermostatically controlled valves are preferably active thermostatically controlled valves.

As mentioned before, the control is defined as being based on the performance of the local units 41, 42, 43 (e.g. shown in Figure 2 for a DH network, Figure 2a for a direct substation configuration and Figure 2b for an indirect substation configuration- and in Figure 3 for a DC network. Figure 2a shows the performance of the local heating unit (e.g. a radiator 12), being the change of the return temperature and the required mass flow rate according to differing degrees of supply temperature e.g. from source 6 at various rates of heat demand. The original heat output of the radiator was q̇ₒ=9 kW and its design parameters being 90°C as the supply temperature, 70°C as the return temperature, 20°C as the indoor temperature, (e.g. measured by sensor 26). Likewise, Figure 2b shows the mutual nested performance of the heat exchagers of local heating units 32h, 32c shown schematically in Figure 1 (which can for example be included in the ubstation 90 of Figure 5) and a radiator unit 12, being the change of the return temperature and the required mass flow rates at the conduit 8 considering the local unit 42 according to differing degrees of supply temperature e.g. from source 6 at various rates of heat demand. Figure 3 shows the performance of a local cooling unit (e.g. 14), being the change of the return temperature and the required mass flow rate according to differing degrees of supply temperature e.g. from source 8 at various rates of cooling demand. The design parameters were defined with the supply temperature being 4.4°C and the return being 13°C while the air inlet temperature was 41°C and the outlet temperature was 26°C, at a total cooling load of 44.34kW.

An embodiment of a control method of the present invention starts at the beginning of the heating season when the hot water supplied to the network e.g. from a source 6 can be operated with a supply temperature of X°C such as 55°C, for example. This beginning period can be defined between the lowest heat demand and the heat demand of Y kw, e.g. 3.96 kW, for example. Above this latter demand rate, the operator can reset the supply temperature up to X + Δ, e.g. 65°C, for example for a period between heat demand rates of Y kw, e.g. 3.96 kW and Z kw, e.g. 5.94 kW, for example. The colder periods can be supplied with further steps of increased supply temperature. Each increment of the supply temperature results in a unique reduction of the return temperature meanwhile keeping the mass flow requirement as low as determined by the network operator. The same applies for the DC systems, at the beginning of the cooling season the network can be supplied with a supply temperature of X' °C, e.g. 10°C e.g. from a source 8. The following hotter periods can be supplied with decreased supply temperature, e.g. a step-wise decrease, each stepped decrease resulting in increased return temperature while keeping the required mass flow rate as low as determined by the network operator.

The need of resetting the supply temperature for some embodiments of the present invention is due to increased/decreased return temperature degrees obtained for the high rates of the heating/cooling load when supplied with low/high supply temperature, respectively for DH/DC networks. As indicated above a reason for resetting is when a thermostatic valve 19h for heating in one building reaches its upper flow limit but cannot open any further or when the thermostatic valve 19h reaches a value approaching such an upper limit, e.g. reaches 90% or 95% of fully open. In this case sufficient heating cannot be obtained and a resetting of the source temperature, e.g. 5°C higher will help to move the operating range of the thermostatic valve 19h towards its mid-range. Should the first step change of the heating source temperature not accomplish a suitable result, the step change can be made again and repeated as often as necessary, i.e. in an open loop control. A similar situation can occur when a thermostatic valve 19h for heating in one building reaches its lower flow limit but cannot close any further because it has reached shut-off or when the thermostatic valve 19h reaches a value approaching such a lower limit, e.g. 10% or 5% of the operating range. In this case the source temperature can be reduced by a step change, e.g. of 5°C. Similar control operations can be applied in the cooling circuit. Resetting is required when a thermostatic valve 19c for cooling in one building reaches its upper flow limit but cannot open any further or when the thermostatic valve 19c reaches a value approaching such an upper limit, such as 90% or 95%. In this case sufficient cooling cannot be obtained and a resetting of the source temperature, e.g. 5°C lower will help to move the operating range of the thermostatic valve 19c towards its mid-range. Should the first step change of the cooling source temperature not accomplish a suitable result, the step change can be made again and repeated as often as necessary, i.e. in an open loop control. A similar situation can occur when a thermostatic valve 19c for cooling in one building reaches its lower flow limit but cannot close any further because it has reached shut-off or when the thermostatic valve 19c reaches a value approaching such a lower limit. In this case the source temperature can be increased by a step change, e.g. of 5°C.

The thermostatically controlled valves are preferably active thermostatically controlled valves.

Applying low-temperature/high-temperature supply is possible during the operation of the existing district networks (at long-lasting partial loads) at DH/DC, respectively. These existing networks were dimensioned according to high-temperature/low-temperature design temperatures during the design stage, for DH/DC networks, respectively. By keeping the flow rate in the local units below a certain level that has been determined by the network operator, by increasing/decreasing the supply temperature, reduction/increment of the return temperature is possible for all periods of the heating/cooling season for DH/DC networks, respectively

Figure 4 shows various examples and embodiments: adjustment of supply temperature:
- Sc2 as rule-of-thumb example,
- Sc3 as performance based supply embodiment of the present invention and
- Sc3r as a further embodiment of the present invention with a further reduction compared with embodiment Sc3 with excessive mass flow rates according to the heat load duration in a year period. Figure 4 shows the heat load duration curve (e.g. a representation of the heat demand in an order from the highest to the lowest) together with the supply temperatures, (i) the first being "Sc2" as the rule-of-thumb changing the supply temperature from 90°C to 70°C according to the outdoor temperature (as is common in existing DH/DC networks), (ii) the second being "Sc3" as the scenario determined by use of an embodiment of the present invention which makes mass flow requirement limit defined with a value MF kg/s, e.g. 0.0806 kg/s and (iii) the third being "Sc3r" that is an embodiment of the present invention with the further reduction of the supply temperature by use of the extra capacity for the mass flow which occurs due to the dimensioning method with the rule-of-thumb of `Maximum Pressure Gradient - according to critical route', which was considered during the design period with use of the scenario Sc2.

Further details about the supply temperature scenarios of Sc3 and Sc3r are as follows.

Sc3: The supply temperature scheme for Sc3 was generated according to performance of a local unit heating system described with reference to Figure 2. When the mass flow requirement from the local heating unit reaches to a first mass flow value, e.g. the (aforementioned) mass flow limit of MF kg/s e.g. 0.0806 kg/s, the operator of the network increases the supply temperature by a first temperature difference Δ such as 5°C more than the previous temperature value. If this fails to bring the network into a balanced state, the supply temperature may be raised by a second temperature difference such as 5°C or interactively with further increases of temperature differences such as 5°C.

Sc3r : Existing DH networks were dimensioned according to the dimensioning method of "Maximum Pressure Gradient" method with consideration of the critical route (the longest route in the network). Due to this method, the pressure loss through the critical route results in a pressure loss value smaller than the design pressure loss level such as a level of P bar, e.g. 8 bar. Hence this is a state where the local performance is not desirable. Hence, the mass flow level circulating in the network can be increased further until the pressure loss through the critical route reaches the design pressure loss level P bar, such as 8 bar. This network, its heat load duration being given in Figure 4, can handle a maximum flow rate of, for example 0.149 kg/s. At this rate the pressure loss through the critical route reaches the design pressure low level P bar, such as 8 bar. The resultant supply temperature scheme through the year period can further be reduced by use of the capacity of this excessive flow rate. This can be observed in Figure 4.

Table 1 shows the benefits achieved when embodiments of the present invention are applied (i.e. embodiments Sc3 and Sc3r) when compared to the rule-of-thumb of Sc2 for various linear heat densities, i.e. the linear heat density means the ratio between the overall heat demand [MWh] and the length of network [m]. In short, the percentage decrease is above 10% for all cases each having various level of linear heat density. The low linear heat density was obtained to have savings of 512-656 thousand euro while the high linear heat density was obtained to have saving of 1.9-2.0 million euro.

**Table 1.**

| Reduction of Electricity Consumption in Total According to Sc2 | | | | | | | | | |
|---|---|---|---|---|---|---|---|---|---|
| Overall Heat Demand [MWh] | 2571 | | | 4928 | | | 9685 | | |
| Length of Network [m] | 1147.5 | 2295 | 5737.5 | 1147.5 | 2295 | 5737.5 | 1147.5 | 2295 | 5737.5 |
| Sc3 [%] | 5.91% | 7.14% | 9.73% | 5.15% | 5.78% | 7.36% | 4.81% | 5.15% | 6.04% |
| Sc3r [%} | 12.74% | 14.70% | 19.12% | 10.73% | 12.09% | 14.12% | 10.06% | 10.64% | 12.22% |
| Sc3 [Gwh] | 0.81 | 0.87 | 1.07 | 1.50 | 1.56 | 1.77 | 2.88 | 2.95 | 3.16 |
| Sc3r [Gwh] | 2.00 | 1.99 | 2.57 | 3.81 | 3.84 | 4.37 | 7.89 | 7.12 | 7.38 |
| Sc3 [1000 Euro] | 207 | 223 | 274 | 383 | 400 | 452 | 737 | 755 | 809 |
| Sc3r[1000 Euro] | 512 | 510 | 656 | 975 | 983 | 1118 | 2020 | 1822 | 1889 |

Table 1 indicates saving of Electricity Consumption with embodiments of the present invention, i.e. Sc3 and Sc3r when compared to the Reset Strategy of the Supply Temperature based on the Rule-of-Thumb (Sc2) conventional method.

Figure 5 shows a network 50 for distributing heating and/or cooling power according to another embodiment of the present invention. Network 50 can be meshed or not meshed. Conduit 55 supplies a heat carrier directly to local unit 83 for heating this local unit 83 such as houses, buildings and industrial premises with heat exchangers such as radiators. Conduit 56 supplies cooling water directly to local unit 83 for cooling this local unit with heat exchangers such as air conditioning units. The operation of local unit 83 is identical to that of the first embodiment and the following only the operation of local units 81, 82 will be described in detail.

Conduit 55 supplies a heat carrier directly to a substation 90 for further transmission to the local units 81, 82 for heating these local units 81, 82 such as houses, buildings and industrial premises with heat exchangers such as radiators. Conduit 56 supplies cooling water directly to substation 90 for further transmission to local units 81, 82 for cooling this local unit with heat exchangers such as air conditioning units. The network 50 can be only for heating or only for cooling or can be for both.

Conduits 58 and 59 are return conduits for conduits 55 and 56, respectively. The local units 81, 82, 83 have cooling devices 64 and/or heating devices 62. Heated water is supplied to heating devices 62 and cooling water is supplied to cooling devices 64. The heated water now cooled is returned via the return conduit 58, and the cooling water now heated by return conduit 59. In the case of local units 81, 82 a heat carrier such as water is supplied through a substation 90 as is the cold energy carrier such as water. The return conduits also preferably pass through substation 90.

In the local units 81, 82 the heating devices 62 and/or the cooling devices 64 are connected hydraulically in parallel. Each of the heating devices 62 and/or the cooling devices 64 is connected to conduits 55 and 56, respectively via the substation 90 and conduits 58 and 59, respectively through bypass conduits via the substation 90. Flow of heat carrier to the heating devices 62 and/or a cooling carrier to the cooling devices 64 is controlled by thermostatically controlled valves 69h and 69c respectively. The thermostatically controlled valves are preferably active thermostatically controlled valves.

The network 50 can include one or more controllable pumps 52, one or more controllable valves 53 and one or more heat energy sources 66 and/or one or more cold energy sources 68.The heat energy source 66 and/or the cold energy source 68 can be controlled by a controller 70, e.g. to control source output temperature. The network 50 may also include thermal accumulators (not shown), e.g. heat storage and cooling tanks, e.g. to deal with peak loads and these can also be controlled by controller 70.

This embodiment of the present invention relates also to a controller 70 for controlling flow and temperature of a heat carrier from a heating or cooling source 66, 68 based on a distributed control using thermostatically controlled valves 69h and 69c in local units 81, 82 such as house, buildings, industrial premises directly to local unit 83 or via a substation 90 for local units 81, 82. These thermostatically controlled valves 69h, 69c set the local flows based on a set point, e.g. settable by a user. Control data, e.g. selected from any, some or all of temperatures, flow rates, pressures, and valve operations from the local units 81, 82, 83 such as houses, buildings or industrial premises can be measured by sensors 72h and 72c for the heating and cooling circuits respectively. Control data e.g. any, some or all of temperatures, flow rates, pressures, valve operations can be supplied from the network 50 to the controller 20. Network control data such as any, some or all of temperatures, flow rates, pressures, can be measured by sensors 74. These control data are brought to a central monitoring unit 75 which includes controller 70. Network flows and pressures and temperatures are monitored and transmitted to the central monitoring unit 75 and to the controller 70 which identifies when the distributed control system is not working well.

Thermostatic control valves 69h and 69c are installed to control all heat exchangers in the local units 81, 82, 83 used for heating or cooling, such as air conditioning equipment and radiators. These thermostatically controlled valves 69h, 69c control based on an indoor temperature meaning that self-driven control valves 69h, 69c adjust the flow rate in the local units 81, 82, 83 automatically in order to achieve a set-point temperature that is defined by the consumer for each thermostatically controlled valve 69h, 69c. The indoor temperature is measured by a sensor 76, for example.

The thermostatically controlled valves are preferably active thermostatically controlled valves.

Substation 90 can be configured with a manifold 67 comprising valves and bypass conduits and if necessary (but less preferred and hence to be considered as an optional extra or alternative) pumps to mix a heat carrier such as water obtained from the heating circuit with a cooling carrier obtained from the cooling circuit. The less preferred mixing of colder heat carrier with hotter heat carrier to lower the temperature of the heat carrier below the temperature from source 66 lose energy and potential temperature differences at heat exchangers such as radiators or cooling equipment at house, buidlings or industrial premises. Also less preferred is the alternative, of mixing a colder heat carrier with hotter heat carrier to increase the temperature of the cooling carrier above the temperature from source 68. Hence it is less preferred if, the substation 90 can set its own outlet temperature for the heating or cooling of buildings 81, 82 independently of the temperature of heat carrier from the source 66 or 68. This should only be used as an optional addition or alternative to adapt to a change made to the source temperature by the controller 20 relating to a problem in another part of the network. Thus providing the substation 90 with the ability to mix carrier streams is less preferred even if it allows the network to be less dependent upon what is happening in only one part of the network. Hence, mixing supply (hot or cold) with return medium or any other colder or hotter medium is not included in the preent invention or is less preferred as providing the supply medium at its maximum temperature results in a reduced return temperature.

The flow rate defined automatically as a consequence of the operation of the thermostatically controlled valves 69h and 69c is monitored by monitoring devices of a district network operator (see items 28 in Figure 1, not shown in Figure 5 but optionally available). Values of flow rates are communicated to the central monitoring unit 75 and the controller 70. If the flow rates of the local units 81, 82, 83 reach an undesirable level, i.e. the heat carrier in a part of the network has reached a high or elevated return temperature above a certain value or a depressed or low return temperature below a certain value, the operator increases/decreases the supply temperature at the sources 66 or 68, respectively via the operation of controller 70. This action by the operator results in decreased/increased return temperature from the local unit 81, 82, 83. The operation to control the source temperature can be automatic. Less preferred or to be avoided is a control of source temperature through mixing hot and cold carrier, e.g. hot and cold water.

As mentioned before, the control is defined as being based on the performance of the local units 81, 82, 83 in an open loop Figure 2 for a DH network and Figure 3 for a DC network applies equally well to the network 50.

The example of the control method of the present invention starts at the beginning of the heating season when the water supplied to the network can be operated with a supply temperature of X°C e.g. 55°C, for example as mentioned above applies equally well to network 50. This beginning period can be defined between the lowest heat demand and the heat demand of Y kw, such as 3.96 kW, for example. Above this latter demand rate, the operator can reset the supply temperature up to X + Δ°C, e.g. up to 65°C, for example for a period between heat demand rates of Y kw, e.g. 3.96 kW and Z kw, e.g. 5.94 kW, for example. The colder periods can be supplied with further increased supply temperature degrees. Each increment of the supply temperature results in a unique reduction of the return temperature meanwhile keeping the mass flow requirement as low as determined by the network operator. The same applies for the DC systems, at the beginning of the cooling season the network can be supplied with a supply temperature of X' °C such as 10°C. The following hotter periods can be supplied with decreased supply temperature, each decrease resulting in increased return temperature while keeping the required mass flow rate as low as determined by the network operator.

The need of resetting the supply temperature is due to increased/decreased return temperature degrees obtained for the high rates of the heating/cooling load when supplied with low/high supply temperature, respectively for DH/DC networks. Another reason for resetting is when a thermostatic valve 19h for heating in one building reaches its upper flow limit but cannot open any further or when the thermostatic valve 19h reaches a value approaching such an upper limit. In this case sufficient heating cannot be obtained and a resetting of the source temperature, e.g. 5°C higher will help to move the operating range of the thermostatic valve 19h towards its mid-range. Should the first step change of the heating source not accomplish a suitable result, the step change can be made again and repeated as often as necessary. A similar situation can occur when a thermostatic valve 19h for heating in one building reaches its lower flow limit but cannot close any further because it has reached shut-off or when the thermostatic valve 19h reaches a value approaching such a lower limit. In this case the source temperature can be reduced by a step change, e.g. of 5°C. Similar control operations can be applied in the cooling circuit.

Applying low-temperature/high-temperature supply is possible during the operation of the existing district networks (at long-lasting partial loads) at DH/DC, respectively. These existing networks were dimensioned according to high-temperature/low-temperature design temperatures during the design stage, for DH/DC networks, respectively. By keeping the flow rate in the local units below a certain level that has been determined by the network operator, by increasing/decreasing the supply temperature, reduction/increment of the return temperature is possible for all periods of the heating/cooling season for DH/DC networks, respectively

Figure 4 also applies to this embodiment as well as the comments made with respect thereto. The benefits achieved and shown in Table 1 also apply to network 50.

Summarising the first and second embodiments demonstrate various ways that a control system of a Demand-Based Operation of a DH/DC network for a distributed control of local heating and/or cooling flows from heating and/or cooling sources through local heating and/or cooling systems using local thermostatically controlled valves can be implemented. In these embodiments a supply temperature at the heating and/or cooling sources is reset in open loop control according to a performance of the local heating and/or cooling systems. This performance can be a thermostatically controlled valve reaching an end of its range, a return temperature exceeding design values, a pressure drop being less than a design level, or a heating or cooling demand rate. The thermostatically controlled valves are preferably active thermostatically controlled valves.

Methods according to the present invention can be performed by a controller 20, 70 either as a standalone device or embedded in another device, e.g. in the central monitor 25, 75. The present invention can use a processing engine to carry out functions. The processing engine preferably has processing capability such as provided by one or more microprocessors, FPGA's, or a central processing unit (CPU) and/or a Graphics Processing Unit (GPU), and which is adapted to carry out the respective functions by being programmed with software, i.e. one or more computer programmes. References to software can encompass any type of programs in any language executable directly or indirectly by a processor, either via a compiled or interpretative language. The implementation of any of the methods of the present invention can be performed by logic circuits, electronic hardware, processors or circuitry which can encompass any kind of logic or analog circuitry, integrated to any degree, and not limited to general purpose processors, digital signal processors, ASICs, FPGAs, discrete components or transistor logic gates and similar.

Such a controller 20, 70 may have memory (such as non-transitory computer readable medium, RAM and/or ROM), an operating system, optionally a display such as a fixed format display, ports for data entry devices such as a keyboard, a pointer device such as a "mouse", serial or parallel ports to communicate other devices, network cards and connections to connect to any of the networks.

The software can be embodied in a computer program product adapted to carry out the functions itemised below or described above when the software is loaded onto the controller 20, 70 and executed on one or more processing engines such as microprocessors, ASIC's, FPGA's etc. Hence a controller 20 for use with any of the embodiments of the present invention can incorporate a computer system capable of running one or more computer applications in the form of computer software.

The methods described above can be performed by one or more computer application programs running on the computer system by being loaded into a memory and run on or in association with an operating system such as Windows^{™} supplied by Microsoft Corp, USA, Linux, Android or similar. The computer system can include a main memory, preferably random access memory (RAM), and may also include a non-transitory hard disk drive and/or a removable non-transitory memory, and/or a non-transitory solid state memory. Non-transitory removable memory can be an optical disk such as a compact disc (CD-ROM or DVD-ROM), a magnetic tape, which is read by and written to by a suitable reader. The removable non-transitory memory can be a computer readable medium having stored therein computer software and/or data. The non-volatile storage memory can be used to store persistent information that should not be lost if the computer system is powered down. The application programs may use and store information in the non-volatile memory.

The software can be used in a Demand-Based Operation of a DH/DC network for a distributed monitoring and optional control of local heating and/or cooling flows from heating and/or cooling sources through local heating and/or cooling systems using local thermostatically controlled valves, the local thermostatically controlled valves setting the local heating and/or cooling flows. The software embodied in the computer program product is adapted to carry out the following functions when the software is loaded onto the respective device or devices and executed on one or more processing engines such as microprocessors, ASIC's, FPGA's etc.:
receiving control input data selected from local cooling and/or heating medium temperatures, local flow rates, local valve operations, local cooling and/or heating medium pressures in the local heating and/or cooling systems as well as optionally from the network,
monitoring the flows and pressures and temperatures and controlling e.g. by resetting in a continuous way or by discrete steps of a supply temperature at the heating and/or cooling sources according to a performance of the local heating and/or cooling systems such as the aforementioned control input data in an open loop control.

The software embodied in the computer program product is adapted to carry out the following functions when the software is loaded onto the respective device or devices and executed on one or more processing engines such as microprocessors, ASIC's, FPGA's etc.:
detecting that the flow rates of the local heating and/or cooling systems reach an undesirable levels, or that a thermostatically controlled valve has reached an upper or lower limit or that a pressure drop is below a design level and increasing or decreasing the supply temperature of a heating and/or cooling source in open loop control. The increase or decrease of the supply temperature results in decreased/increased return temperature from the local heating and/or cooling systems.

Any of the above software may be implemented as a computer program product which has been compiled for a processing engine in any of the servers or nodes of the network. The computer program product may be stored on a non-transitory signal storage medium such as an optical disk (CD-ROM or DVD-ROM), a digital magnetic tape, a magnetic disk, a solid state memory such as a USB flash memory, a ROM, etc.

## Claims

1. A control system of a Demand-Based Operation of a DH/DC network (1;50) for a distributed control of local heating and/or cooling flows of heating or cooling fluids in local units (41,42,43;81,82,83), respectively, from heating and/or cooling sources (16,18;66,68) through local heating and/or cooling systems of the local units (41,42,43;81,82,83) using local thermostatically controlled valves (19h,19c;69h;69c),
wherein the local thermostatically controlled valves being adapted to set the local heating and/or cooling flows in the local units according to a local measured temperature,
wherein control data, selected from any of: local return temperatures, valve positions, local flow rates, and/or local cooling and/or heating medium pressures in the local heating and/or cooling systems, are brought to a central monitor (25;75),
wherein the central monitor being adapted to monitor the control data and to reset a supply temperature at the heating and/or cooling sources in a step-wise manner according to a performance of the local heating and/or cooling systems, and
wherein, if the central monitor (25;75) detects that in one of the local heating and/or cooling systems of the local units (41,42,43;81,82,83):
i) a flow rate reaches an upper or a lower limit when local flow rates are selected as said control data, or
ii) a return temperature reaches an upper or a lower limit when local return temperatures are selected as said control data, or
iii) a thermostatically controlled valve has reached an upper or lower limit when valve positions are selected as said control data, or
iv) a pressure drop is below a design level when local cooling and/or heating medium pressures in the local heating and/or cooling systems are selected as said control data,
then the central monitor is adapted to increase or decrease the supply temperature of the heating and/or cooling source (16,18;66,68) in a step-wise manner.

2. Control system of claim 1, further comprising local self-driven control valves for adjusting the flow rate in the local heating and/or cooling systems (41,42,43;81,82,83) automatically in order to achieve a set-point temperature of the local thermostatically controlled valves (19h,19c;69h;69c).

3. Control system of claim 2, wherein heating or cooling fluids supplied to the local self-driven control valves are at the supply temperature of heating or cooling fluids at the heating and/or cooling sources (16,18;66,68).

4. Control system according to any of previous claims, wherein increase or decrease of the supply temperature results in decreased/increased return temperature from the local heating and/or cooling systems.

5. A method of operating a Demand-Based Operation of a DH/DC network (1;50) for a distributed control of local heating and/or cooling flows of heating or cooling fluids in local units (41,42,43;81,82,83), respectively, from heating and/or cooling sources (16,18;66,68) through local heating and/or cooling systems of the local units (41,42,43;81,82,83) using local thermostatically controlled valves (19h,19c;69h;69c), the method comprising:
• setting the local thermostatically controlled valves to set the local heating and/or cooling flows in the local units according to a local measured temperature;
• communicating control data from the local heating and/or cooling systems to a central monitor (25,75), the control data being selected from any of: local return temperatures, local flow rates, local valve operations, and/or local cooling and/or heating medium pressures in the local heating and/or cooling systems,
• if the central monitor (25;75) detects that in one of the local heating and/or cooling systems of the local units (41,42,43;81,82,83):
i) a flow rate reaches an upper or a lower limit when local flow rates are selected as said control data, or
ii) a return temperature reaches an upper or a lower limit when local return temperatures are selected as said control data, or
iii) a thermostatically controlled valve has reached an upper or lower limit when valve positions are selected as said control data, or
iv) a pressure drop is below a design level when local cooling and/or heating medium pressures in the local heating and/or cooling systems are selected as said control data,
then the central monitor increases or decreases a supply temperature of the heating and/or cooling source (16,18;66,68) in a step-wise manner.

6. The method according to claim 5, further comprising the step of adjusting the flow rate in the local heating and/or cooling systems (41,42,43;81,82,83) automatically by local self-driven thermostatically controlled valves in order to achieve a set-point temperature.

7. The method of claim 6, wherein heating or cooling fluids supplied to the local self-driven control valves are at the supply temperature of heating or cooling fluids at the heating and/or cooling sources (16,18;66,68).

8. The method according to any of claims 5 to 7, wherein increase or decrease of the supply temperature results in decreased/increased return temperature from the local heating and/or cooling systems.

## Patentansprüche

1. Steuersystem für einen bedarfsbasierten Betrieb eines DH/DC-Netzes (1; 50) für eine verteilte Regelung lokaler Heiz- und/oder Kühlströme von Heiz- oder Kühlfluiden in lokalen Einheiten (41, 42, 43; 81, 82, 83) bzw. von Heiz- und/oder Kühlquellen (16, 18; 66, 68) durch lokale Heiz- und/oder Kühlsysteme der lokalen Einheiten (41, 42, 43; 81, 82, 83) unter Verwendung lokaler thermostatisch gesteuerter Ventile (19h, 19c; 69h; 69c),
wobei die lokalen thermostatisch gesteuerten Ventile dazu angepasst sind, die lokalen Heiz- und/oder Kühlströme in den lokalen Einheiten gemäß einer lokalen gemessenen Temperatur anzupassen, wobei die Steuerdaten, die aus einem ausgewählt sind von: lokalen Rücklauftemperaturen, Ventilpositionen, lokalen Strömungsraten und/oder lokalen Kühl- und/oder Heizmediumdrücken in den lokalen Heiz- und/oder Kühlsystemen, zu einem zentralen Monitor (25; 75) gebracht werden,
wobei der zentrale Monitor dazu angepasst ist, die Steuerdaten zu überwachen und eine Zufuhrtemperatur der Heiz- und/oder Kühlquellen in einer schrittweisen Art gemäß einer Leistung der lokalen Heiz- und/oder Kühlsysteme zurückzustellen, und
wobei, falls der zentrale Monitor (25; 75) erfasst, dass in einem der lokalen Heiz- und/oder Kühlsysteme der lokalen Einheiten (41, 42, 43; 81, 82, 83):
i) eine Strömungsrate eine obere oder eine untere Grenze erreicht, wenn die lokalen Strömungsraten als die Steuerdaten ausgewählt sind, oder
ii) eine Rücklauftemperatur eine obere oder eine untere Grenze erreicht, wenn die lokalen Rücklauftemperaturen als die Steuerdaten ausgewählt sind, oder
iii) ein thermostatisch gesteuertes Ventil eine obere oder untere Grenze erreicht hat, wenn Ventilpositionen als die Steuerdaten ausgewählt sind, oder
iv) ein Druckabfall unter einem Konzeptionsniveau liegt, wenn lokale Kühl- und/oder Heizmediumdrücke in den lokalen Heiz- und/oder Kühlsystemen als die Steuerdaten ausgewählt sind,
der zentrale Monitor dazu angepasst ist, die Zufuhrtemperatur der Heiz- und/oder Kühlquelle (16, 18; 66, 68) in einer schrittweisen Art zu erhöhen oder zu reduzieren.

2. Steuersystem nach Anspruch 1, das ferner lokale selbstgetriebene Steuerventile zum automatischen Einstellen der Strömungsrate in den lokalen Heiz- und/oder Kühlsystemen (41, 42, 43; 81, 82, 83) umfasst, um eine Solltemperatur der lokalen thermostatisch gesteuerten Ventile (19h, 19c; 69h; 69c) zu erzielen.

3. Steuersystem nach Anspruch 2, wobei die Heiz- oder Kühlfluide, die zu den lokalen selbstgetriebenen Steuerventilen zugeführt werden, die Zufuhrtemperatur der Heiz- oder Kühlfluide an den Heiz- und/oder Kühlquellen (16, 18; 66, 68) aufweisen.

4. Steuersystem nach einem der vorstehenden Ansprüche, wobei die Erhöhung oder Reduktion der Zufuhrtemperatur reduzierte/erhöhte Rücklauftemperatur von den lokalen Heiz- und/oder Kühlsystemen ergibt.

5. Verfahren zum Betreiben eines bedarfsbasierten Betriebs eines DH/DC-Netzes (1; 50) für eine verteilte Regelung lokaler Heiz- und/oder Kühlströme von Heiz- oder Kühlfluiden in lokalen Einheiten (41, 42, 43; 81, 82, 83) bzw. von Heiz- und/oder Kühlquellen (16, 18; 66, 68) durch lokale Heiz- und/oder Kühlsysteme der lokalen Einheiten (41, 42, 43; 81, 82, 83) unter Verwendung lokaler thermostatisch gesteuerter Ventile (19h, 19c; 69h; 69c), wobei das Verfahren umfasst:
• Einstellen lokaler thermostatisch gesteuerter Ventile, um die lokalen Heiz- und/oder Kühlströme in den lokalen Einheiten gemäß einer lokalen gemessenen Temperatur einzustellen;
• Kommunizieren von Steuerdaten von den lokalen Heiz- und/oder Kühlsystemen zu einem zentralen Monitor (25, 75), wobei die Steuerdaten ausgewählt sind aus einem von: lokalen Rücklauftemperaturen, lokalen Strömungsraten, lokalen Ventilbetrieben und/oder lokalen Kühl- und/oder Heizmediumdrücken in den lokalen Heiz- und/oder Kühlsystemen,
• falls der zentrale Monitor (25; 75) erfasst, dass in einem der lokalen Heiz- und/oder Kühlsysteme der lokalen Einheiten (41, 42, 43; 81, 82, 83):
i) eine Strömungsrate eine obere oder eine untere Grenze erreicht, wenn die lokalen Strömungsraten als die Steuerdaten ausgewählt sind, oder
ii) eine Rücklauftemperatur eine obere oder eine untere Grenze erreicht, wenn die lokalen Rücklauftemperaturen als die Steuerdaten ausgewählt sind, oder
iii) ein thermostatisch gesteuertes Ventil eine obere oder untere Grenze erreicht hat, wenn Ventilpositionen als die Steuerdaten ausgewählt sind, oder
iv) ein Druckabfall unter einem Konzeptionsniveau liegt, wenn lokale Kühl- und/oder Heizmediumdrücke in den lokalen Heiz- und/oder Kühlsystemen als die Steuerdaten ausgewählt sind,
der zentrale Monitor eine Zufuhrtemperatur der Heiz- und/oder Kühlquelle (16, 18; 66, 68) in einer schrittweisen Art erhöht oder reduziert.

6. Verfahren nach Anspruch 5, das ferner den Schritt des automatischen Einstellens der Strömungsrate in den lokalen Heiz- und/oder Kühlsystemen (41, 42, 43; 81, 82, 83) durch lokale selbstgetriebene thermostatisch gesteuerte Ventile umfasst, um eine Solltemperatur zu erzielen.

7. Verfahren nach Anspruch 6, wobei die Heiz- oder Kühlfluide, die zu den lokalen selbstgetriebenen Steuerventilen zugeführt werden, die Zufuhrtemperatur der Heiz- oder Kühlfluide an den Heiz- und/oder Kühlquellen (16, 18; 66, 68) aufweisen.

8. Verfahren nach einem der Ansprüche 5 bis 7, wobei die Erhöhung oder Reduktion der Zufuhrtemperatur reduzierte/erhöhte Rücklauftemperatur von den lokalen Heiz- und/oder Kühlsystemen ergibt.

## Revendications

1. Système de commande d'un Fonctionnement Fondé sur la Demande d'un réseau DH/DC (1 ; 50) pour une commande distribuée de flux locaux de chauffage et/ou de refroidissement de fluides de chauffage ou de refroidissement dans des unités locales (41, 42, 43 ; 81, 82, 83), provenant respectivement de sources de chauffage et/ou de refroidissement (16, 18 ; 66, 68) par l'intermédiaire de systèmes locaux de chauffage et/ou de refroidissement des unités locales (41, 42, 43 ; 81, 82, 83) en utilisant des vannes locales commandées de façon thermostatique (19h, 19c ; 69h ; 69c),
dans lequel les vannes locales commandées de façon thermostatique sont conçues pour régler les flux locaux de chauffage et/ou de refroidissement dans les unités locales selon une température locale mesurée,
dans lequel des données de commande, sélectionnées à partir de n'importe lesquelles de : températures locales de retour, positions de vanne, débits locaux, et/ou pressions locales de milieu de refroidissement et/ou de chauffage dans les systèmes locaux de chauffage et/ou de refroidissement, sont amenées à un dispositif central de contrôle (25 ; 75),
dans lequel le dispositif central de contrôle est conçu pour contrôler les données de commande et pour réinitialiser une température d'alimentation au niveau des sources de chauffage et/ou de refroidissement d'une manière point par point selon un rendement des systèmes locaux de chauffage et/ou de refroidissement, et
dans lequel, si le dispositif central de contrôle (25 ; 75) détecte que dans un système particulier des systèmes locaux de chauffage et/ou de refroidissement des unités locales (41, 42, 43 ; 81, 82, 83) :
i) un débit atteint une limite supérieure ou inférieure quand des débits locaux sont sélectionnés en tant que dites données de commande, ou
ii) une température de retour atteint une limite supérieure ou inférieure quand des températures locales de retour sont sélectionnées en tant que dites données de commande, ou
iii) une vanne commandée de façon thermostatique a atteint une limite supérieure ou inférieure quand des positions de vanne sont sélectionnés en tant que dites données de commande, ou
iv) une chute de pression est au-dessous d'un niveau de conception quand des pressions locales de milieu de refroidissement et/ou de chauffage dans les systèmes locaux de chauffage et/ou de refroidissement sont sélectionnées en tant que dites données de commande,
alors le dispositif central de contrôle est conçu pour augmenter ou diminuer la température d'alimentation de la source de chauffage et/ou de refroidissement (16, 18 ; 66, 68) d'une manière point par point.

2. Système de commande selon la revendication 1, comprenant en outre des vannes locales de commande auto-pilotées pour ajuster le débit dans les systèmes locaux de chauffage et/ou de refroidissement (41, 42, 43 ; 81, 82, 83) automatiquement afin de parvenir à une température de point de consigne des vannes locales commandées de façon thermostatique (19h, 19c ; 69h ; 69c) .

3. Système de commande selon la revendication 2, dans lequel des fluides de chauffage ou de refroidissement fournis aux vannes locales de commande auto-pilotées sont à la température d'alimentation de fluides de chauffage ou de refroidissement au niveau des sources de chauffage et/ou de refroidissement (16, 18 ; 66, 68) .

4. Système de commande selon l'une quelconque des revendications précédentes, dans lequel une augmentation ou une diminution de la température d'alimentation aboutit à une température de retour diminuée/augmentée en provenance des systèmes locaux de chauffage et/ou de refroidissement.

5. Procédé de mise en œuvre d'un Fonctionnement Fondé sur la Demande d'un réseau DH/DC (1 ; 50) pour une commande distribuée de flux locaux de chauffage et/ou de refroidissement de fluides de chauffage ou de refroidissement dans des unités locales (41, 42, 43 ; 81, 82, 83), respectivement en provenance de sources de chauffage et/ou de refroidissement (16, 18 ; 66, 68) par l'intermédiaire de systèmes locaux de chauffage et/ou de refroidissement des unités locales (41, 42, 43 ; 81, 82, 83) en utilisant des vannes locales commandées de façon thermostatique (19h, 19c ; 69h ; 69c), le procédé comprenant :
• le réglage des vannes locales commandées de façon thermostatique pour régler les flux locaux de chauffage et/ou de refroidissement dans les unités locales selon une température locale mesurée ;
• la communication de données de commande en provenance des systèmes locaux de chauffage et/ou de refroidissement à un dispositif central de contrôle (25, 75), les données de commande étant sélectionnées à partir de n'importe lesquelles de : températures locales de retour, débits locaux, mises en œuvre de vanne locales, et/ou pressions locales de milieu de refroidissement et/ou de chauffage dans les systèmes locaux de chauffage et/ou de refroidissement,
• si le dispositif central de contrôle (25 ; 75) détecte que dans un système particulier des systèmes locaux de chauffage et/ou de refroidissement des unités locales (41, 42, 43 ; 81, 82, 83) :
i) un débit atteint une limite supérieure ou inférieure quand des débits locaux sont sélectionnés en tant que dites données de commande, ou
ii) une température de retour atteint une limite supérieure ou inférieure quand des températures locales de retour sont sélectionnées en tant que dites données de commande, ou
iii) une vanne commandée de façon thermostatique a atteint une limite supérieure ou inférieure quand des positions de vanne sont sélectionnés en tant que dites données de commande, ou
iv) une chute de pression est au-dessous d'un niveau de conception quand des pressions locales de milieu de refroidissement et/ou de chauffage dans les systèmes locaux de chauffage et/ou de refroidissement sont sélectionnées en tant que dites données de commande,
alors le dispositif central de contrôle augmente ou diminue une température d'alimentation de la source de chauffage et/ou de refroidissement (16, 18 ; 66, 68) d'une manière point par point.

6. Procédé selon la revendication 5, comprenant en outre l'étape consistant à ajuster le débit dans les systèmes locaux de chauffage et/ou de refroidissement (41, 42, 43 ; 81, 82, 83) automatiquement par des vannes locales auto-pilotées commandées de façon thermostatique afin de parvenir à une température de point de consigne.

7. Procédé selon la revendication 6, dans lequel des fluides de chauffage ou de refroidissement fournis aux vannes locales de commande auto-pilotées sont à la température d'alimentation de fluides de chauffage ou de refroidissement au niveau des sources de chauffage et/ou de refroidissement (16, 18 ; 66, 68).

8. Procédé selon l'une quelconque des revendications 5 à 7, dans lequel une augmentation ou une diminution de la température d'alimentation aboutit à une température de retour diminuée/augmentée en provenance des systèmes locaux de chauffage et/ou de refroidissement.
